# EUROPEAN PATENT SPECIFICATION

(11) **EP 1 622 449 B1**
(45) Date of publication and mention of the grant of the patent: **17.10.2007**
(21) Application number: 05724436.0
(22) Date of filing: 03.03.2005
(51) Int. Cl.: A01N 43/16

(54) **METHODS FOR USING SUCROSE OCTANOATE TO CONTROL PESTS**
VERFAHREN FÜR DIE PESTKONTROLLE UNTER VERWENDUNG VON SACCHAROSE OCTANOAT
PROCEDES D'UTILISATION D'OCTANOATE DE SACCHAROSE POUR LUTTER CONTRE LES ANIMAUX NUISIBLES

(30) Priority: 08.03.2004 US 551289 P
(43) Date of publication of application: 08.02.2006
(73) Proprietor: S.C. Johnson & Son, Inc., Racine, WI 53403 (US)
(72) Inventor: WADLEIGH, Richard, W., Racine, Wisconsin 53402 (US); PERRY, Robert, E., Racine, Wisconsin 53402 (US); SCHROEDER, Peter, J., Racine, Wisconsin 53406 (US)
(74) Representative: Kirsch, Susan Edith
(86) International application number: PCT/US2005/006891
(87) International publication number: WO 2005/092098

(56) References cited:
- WO-A-96/01832
- WO-A-03/014048
- GB-A- 2 119 251
- US-B1- 6 605 598
- J.P. MICHAUD AND L. MCKENZIE: "Safety of a novel insecticide, sucrose octanoate, to beneficial insects in florida citrus" FLORIDA ENTOMOLOGIST, vol. 87, no. 1, March 2004 (2004-03), pages 6-9, XP002336446
- DATABASE WPI Section Ch, Week 200124 Derwent Publications Ltd., London, GB; Class C03, AN 1998-306067 XP002336448 & JP 03 156918 B2 (KANEBO LTD) 16 April 2001 (2001-04-16)

## Description

### BACKGROUND OF THE INVENTION

The present invention relates to methods for controlling certain insects and other pests by applying solutions of sucrose octanoate directly to the pests.

A variety of pesticidal formulations are known for controlling insects, and other pests controlled by techniques similar to those used to control insects, in various environments. However, for most of these formulations the formulations contain one or more ingredients that have not previously been recognized as safe for use in connection with foods. Hence, the usage directions for such products, and/or the governmental approvals for using such products, often contain undesirable restrictions. Also the use of such pesticides is sometimes perceived by certain consumers as undesirable (e.g. the organic foods movement).

Some pesticides with improved toxicity and/or degradability characteristics, such as alkyl glycosides, have been developed. See e.g. U.S. patent 4,888,325. However, they are not optimal for certain uses.

As described in U.S. patent 6,419,941, the art has also discovered a class of polyol esters. Some of these esters are sugar esters that naturally occur in certain plants. Others have been synthesized, such as by using an ester manufacturing process like those described in U.S. patent 5,756,716. These syntheses typically involved reacting an organic acid with a polyol (preferably a sugar type moiety in ring or linear form) in an esterification reaction, where the polyol contains five to twelve carbons. The polyol ester which results may be a monoester, or may be a mix of monoesters with multiple esterified variants.

Certain sugar esters have previously been proposed to be used to spray plants/mushrooms so as to control certain soft body/sensitive pests such as psylla, sciarid flies, white flies, scales, hornworms, aphids and spider mites. For example, AVA Chemical Ventures (d/b/a/ Avachem) commercially sells a 40% aqueous solution of sucrose octanoate for spray in diluted form on various plants/mushrooms. In this regard, they suggest diluting it and then spraying a 1.25% to 2.5% solution on mushrooms to control a sciarid fly infestation. Other Avachem literature suggests spraying plants with even lower concentrations of the formulation to control aphids and spider mites.
GB 2 119 251 discloses an aerosol formulation which comprises permethrin, a hydrocarbon propellant, an aliphatic hydrocarbon solvent in which permethrin is soluble, a sorbitol ester, a polyethylene glycol oleate, and water.
WO 03/014048 discloses the use of polyol esters such as sorbitol decanoate, sucrose octanoate or xylitol decanoate as safe, effective contact insecticides. The insecticides were tested against pear psylla, tobacco hornworm, tobacco aphids and two-spotted spider mites.
US 6 605 598 and WO 96/01 832 disclose the use of environmentally safe pesticides for the control of soft-bodied arthropod pests such as white flies or aphids.
JP 03 156918 relates to a fatty acid ester of polyol for repelling insects such as springtails, moths, flies and mosquitoes.

There have also been prior art suggestions to use such compounds (e.g. sucrose octanoate ester) to control Varroa mites infesting populations of adult honey bees. These compounds were perceived as being safe to the desirable commercial honey bee population, notwithstanding that it could be used to control such mites. Similarly, the USDA has published information on the use of a sucrose octanoate which indicates that it is a desirable plant insecticide because it can control certain soft body/sensitive insects while not controlling certain hard body insects that are desirable (such as a lady beetle).
Michaud, J.P. and McKenzie, C.L. "Safety of a Novel Insecticide, Sucrose Octanoate, to Beneficial Insects in Florida Citrus" (March 2004) Florida Entomologist 87(1) pages 6 to 9 demonstrates the non-toxicity of sucrose octanoate to beneficial insects, in other words, four species of lady beetles, a lacewing, a parasitic wasp and a predatory bug, a total of seven insects.

Hence, prior to the present invention, it was generally thought by the art that polyol esters like sucrose octanoate and sorbitol octanoate were not effective pesticides against more resilient types of pests. In fact, the art thought that this selectivity made these compounds particularly desirable for certain purposes.

Thus, a need still exists for pesticidal formulations that can control a variety of resilient insects/pests in an environmentally acceptable way, and improved techniques for using such formulations.

### BRIEF SUMMARY OF THE INVENTION

The invention provides a method according to claim 1.
The invention further provides a use according to claim 4.
The most preferred esters may be monoesters, or mixtures of monoesters, diesters and triesters.

Apart from the ester used, we have discovered that it is desirable to directly apply the chemical to the pest, rather than merely applying the chemical to an environment (such as a plant leaf) where the pest might later be. Further, we have discovered that it is important that the animal be contacted with a sufficient amount of the ester by direct spraying (0.1 gram, preferably 0.25 gram or more). This is achieved by spraying the pest with a formulation having a relatively high concentration of the ester (2.8% or above) where the spray is a relatively concentrated spray.

The ester is preferably delivered in an aqueous solution (e.g. 80% or more water), and most preferably the solution has nothing in it besides the water and the ester. One way to achieve this would be to acquire from Avachem Chemical Ventures, LLC of Portsmouth, New Hampshire their 40% aqueous solution of sucrose octanoate (a mixture of mono, di and tri esters), and then dilute it down to a 5% concentration using distilled water, and then place the liquid in a spray bottle such as the Calmar 15508P118 bottle set on a crude spray setting (see also U.S. patent Re. 33,235). One then could spray a pest, such as a cockroach, with the spray from a distance of about 0.1 to 1 meter.

Alternatively, for solubility or other reasons, one may decide to use other solvents besides water. For example, one could obtain sucrose octanoate from Applied Power Concepts, Inc. of Orange, California. They dissolve their mono, di and tri esters in n-butanol. If one starts with a 90% solution in n-butanol water can dilute the solution to the preferred range of concentration. Therefore, the solutions need not be entirely aqueous solutions.

If an aerosol form is desired, one could add a hydrocarbon propellant (e.g. isobutane/propane mix), plus a small amount of surfactant to create an emulsion or microemulsion, plus corrosion inhibitors, fragrances, or other known aerosol insecticide additives.

It is particularly preferred that the formulation be sprayed from a hand pump spray bottle where the bottle can deliver at least 95% of its spray which reaches a surface which is one meter from the sprayer, within 0.5 meter of a selected target point on that surface. This maximizes the amount of spray contacting the target insect.

A suitable spray bottle assembly for delivering insecticide has an internal cavity containing the above formulation. There is also a trigger-activated pump for pumping the formulation from the cavity to an outlet. Manual activation of the trigger can cause the assembly to spray a surface that is one meter from the outlet such that at least 95% of the spray which reaches that surface will contact the surface within 0.5 meter of a selected point on that surface.

As will be appreciated from the following, the present invention can cause quick knock down of, and ultimately kill, a variety of hard body/more resilient pests common in the home. The control can be achieved with just a water solution of the ester being sprayed on the insect. Hence, the cost of the formulation can be kept reasonable, formulating the formulation is easy, and the formulations will be more widely acceptable with respect to environmental concerns.

The preferred pests to be controlled are crawling insects such as cockroaches and ants. However, the formulations can also be used on nests of flying insects such as wasps.

The foregoing and other advantages of the invention will become apparent from the following description. In the following description reference is made to the accompanying drawing which forms a part thereof.

### BRIEF DESCRIPTION OF THE DRAWINGS

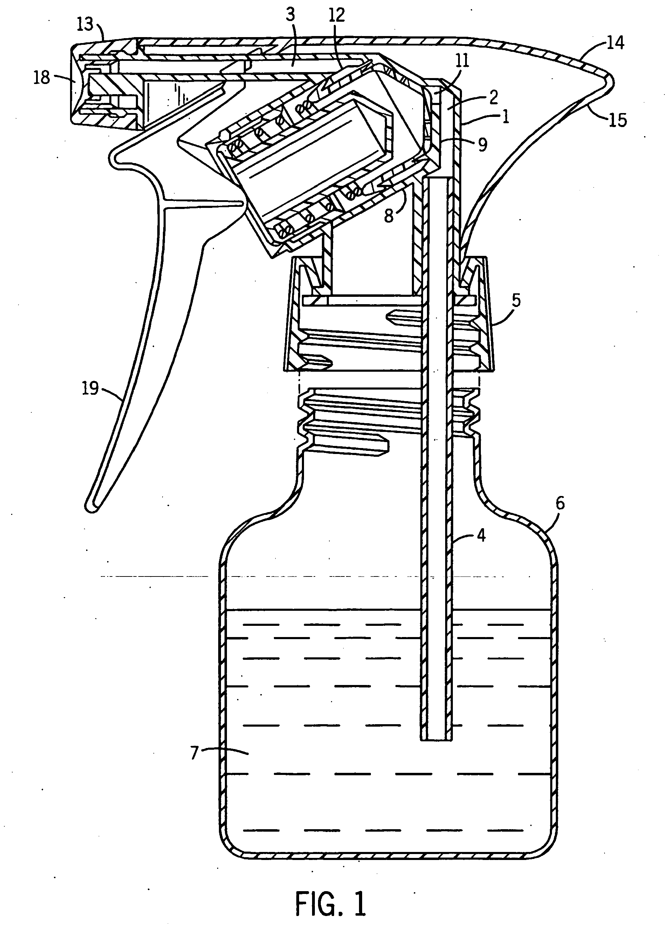

FIG. 1 is a sectional/schematic view of a spray bottle capable of delivering the formulations of the present invention in a desirable manner.

### DETAILED DESCRIPTION OF THE PREFERRED EMBODIMENTS

A. Spray Bottles

A wide variety of known pump type spray bottles can be used to deliver the formulations. See e.g. U.S. patent Re. 33,235. The most preferred spray bottles are those that have nozzles which direct the spray in a more focused pattern (as distinguished from a widespread fine spray).

FIG. 1 shows an example of one type of spray bottle that would be suitable for use with the present invention. There is a pump assembly 1 having an inlet 2 and an outlet 3. A dip tube 4 extends downward there from.

A cap 5 engages the usual bottle 6 in threaded fashion. Prior to assembling the cap 5 to the bottle 6 the bottle is substantially filled with formulation 7 of the present invention.

As is conventional, the pump assembly 1 has a cylinder 8 having an end wall 9 containing an inlet 11. The outlet port 12 extends to a nozzle section 13. The assembly may be provided with the usual shroud 14 having decorative contoured walls 15.

The outlet portion 18 of the nozzle is configured to provide a directed focused spray. There is also a trigger 19.

In operation, and as is well understood in the art, compression of the trigger 19 pushes the pump assembly components, causing spray to be ejected out the outlet portion 18. The return of the trigger to its rest position permits the chemical 7 to be sucked into the pump chamber.

The novelty of FIG. 1 relates to the chemistry of the chemical 7 and the selection of a nozzle outlet portion 18 which provides a focused spray in connection therewith.

B. Formulations.

In our experiments we created aqueous solutions of sucrose octanoate by diluting the more concentrated formulations provided by the aforesaid manufacturers. We created varied concentrations ranging from 0.05% through 10%.

C. Testing.

We tested our formulations by spraying them on cockroaches, ants, crickets, silverfish, wasps, bristletails, hornets, centipedes, earwigs, spiders and sowbugs. For example, we found our formulations capable of controlling all these species given direct application of a concentrated spray of the formulation. We found that when spraying about three grams of the formulation containing sucrose octanoate we had essentially no kill at 24 hours for German cockroaches at 0.1% concentration, about 80% kill at 24 hours for German cockroaches at 1 % concentration, and 100% kill at 5% concentration.

In other experiments, the average time to achieve knock down of such cockroaches was over a minute at concentrations of only 1%. It was about 19 seconds for a 2% solution, and then at about 16 seconds for concentrations between 3 and 5%. The optimal concentration for application appears to be about 2.8% or above.

Using 5% concentrations, average knock down times of 40 seconds or below were achieved for various other species as well (e.g. ants, crickets, silverfish, wasps, bristletails, and hornets). Hence, the invention is widely applicable to insects and other pests controllable by techniques commonly used to control insects (e.g. centipedes).

Hence, we have discovered that by applying these chemicals directly to even hard body/resistant type pests, in sufficient concentrations of the ester, desirable control can be achieved (both quick knock down and effective kill). The dose to contact the pest is at least 0.1 gram of the ester.

The above description has been that of preferred embodiments of the present invention.

### Industrial Applicability

The present invention provides methods for controlling a variety of insects and other pests using sucrose octanoate.

## Claims

1. A method of killing or knocking down a pest comprising:
spraying the pest with a formulation consisting essentially of sucrose octanoate and a solvent, wherein the formulation comprises at least 2.8% of the sucrose octanoate by weight;
wherein the pest is contacted with at least 0.1g of the sucrose octanoate; and
wherein the pest is selected from the group consisting of cockroaches, ants, silverfish, firebrats, bristletails, wasps, hornets, crickets, earwigs, centipedes, scorpions, sowbugs, pillbugs, and spiders;
whereby the pest is killed or knocked down.

2. The method of claim 1, wherein the pest is selected from the group consisting of cockroaches and ants.

3. The method of claim 2, wherein the pest is a cockroach.

4. Use of a formulation consisting essentially of at least 2.8% sucrose octanoate by weight and a solvent to kill or knock down a pest selected from the group consisting of cockroaches, ants, silverfish, firebrats, bristletails, wasps, hornets, crickets, earwigs, centipedes, scorpions, sowbugs, pillbugs, and spiders; and
wherein the pest is contacted with at least 0.1g of the sucrose octanoate.

## Patentansprüche

1. Verfahren zum Abtöten oder Um- bzw. Niederwerfen eines Schädlings mit folgenden Schritten;
Besprühen des Schädlings mit einem Ansatz, der im wesentlichen aus Sucroseoctanoat und einem Lösungsmittel besteht, wobei der Ansatz mindestens 2,8 Gew.-% Sucroseoctanoat aufweist;
wobei der Schädling mit mindestens 0,1 g Sucroseoctanoat kontaktiert wird; und
der Schädling aus der Gruppe gewählt ist, die aus Küchenschaben, Ameisen, Silber- und Ofenfischchen, Zottensehwänzen, Wespen, Hornissen, Grillen, Ohrwürmern, Tausendfüßern, Skorpionen, Roll- und Bohrasseln sowie Spinnen besteht ;
wodurch der Schädling getötet oder um- bzw. niedergeworfen wird.

2. Verfahren nach Anspruch 1, bei dem der Schädling aus der aus den Küchenschaben und Ameisen bestehenden Gruppe gewählt ist.

3. Verfahren nach Anspruch 2, bei dem der Schädling eine Küchenschabe ist.

4. Verwendung eines Ansatzes, der im wesentlichen aus mindestens 2,8 Gew.-% Sucroseoctanoat und einem Lösungsmittel besteht, um einen Schädling aus der Gruppe Küchenschaben, Ameisen, Silber- und Ofenfischchen, Zottensehwänze, Wespen, Hornissen, Grillen, Ohrwürmern, Tausendfüßer, Skorpione, Roll- und Bohrasseln sowie Spinnen abzutöten oder um- bzw. niederzuwerfen;
wobei der Schädling mit mindestens 0,1 g Sucroseoctanoat kontaktiert wird.

## Revendications

1. Procédé pour tuer ou paralyser par knock down un animal nuisible comprenant :
la pulvérisation sur le nuisible d'une formulation constituée essentiellement par de l'octanoate de saccharose et un solvant, la formulation comprenant au moins 2,8 % d'octanoate de saccharose en masse ;
où le nuisible est mis en contact avec au moins 0,1 g d'octanoate de saccharose ; et
où le nuisible est choisi dans le groupe constitué par les blattes, les fourmis, le lépisme argenté, les thermobies, les archaeognathes, les guêpes, les frelons, les grillons, les perce-oreilles, les centipèdes, les scorpions, les cloportes du type sowbug, les cloportes du type pillbug et les araignées ;
où le nuisible est tué ou paralysé.

2. Procédé selon la revendication 1, dans lequel le nuisible est choisi dans le groupe constitué par les blattes et les fourmis.

3. Procédé selon la revendication 2, dans lequel le nuisible est une blatte.

4. Utilisation d'une formulation constituée essentiellement par au moins 2,8 % d'octanoate de saccharose en masse et un solvant pour tuer ou paralyser par knock down un nuisible choisi dans le groupe constitué par les blattes, les fourmis, le lépisme argenté, les thermobies, les archaeognathes, les guêpes, les frelons, les grillons, les perce-oreilles, les centipèdes, les scorpions, les cloportes du type sowbug, les cloportes du type pillbug et les araignées ; et
où le nuisible cst mis en contact avec au moins 0,1 g d'octanoate de saccharose.
